(19) **Europäisches Patentamt / European Patent Office / Office européen des brevets**

(11) **EP 2 292 451 B1**

(12) **EUROPEAN PATENT SPECIFICATION**

(45) Date of publication and mention
of the grant of the patent:
**07.11.2012  Bulletin 2012/45**

(51) Int Cl.:
*B60C 17/00* (2006.01)     *B60C 1/00* (2006.01)
*B60C 9/00* (2006.01)      *B60C 9/20* (2006.01)
*B60C 11/00* (2006.01)     *D07B 1/06* (2006.01)

(21) Application number: **09762382.1**

(22) Date of filing: **01.06.2009**

(86) International application number:
**PCT/JP2009/060004**

(87) International publication number:
**WO 2009/150952 (17.12.2009 Gazette 2009/51)**

(54) **RUN-FLAT TIRE**

RUN-FLAT-REIFEN

PNEU DE TYPE À FLANCS RENFORCÉS

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **11.06.2008  JP 2008153564**

(43) Date of publication of application:
**09.03.2011  Bulletin 2011/10**

(73) Proprietor: **Bridgestone Corporation
Tokyo 104-8340 (JP)**

(72) Inventors:
• **HAYASHI SHOJI
Kodaira-shi
Tokyo 187-0031 (JP)**

• **MORII Takao
Kodaira-shi
Tokyo 187-0031 (JP)**

(74) Representative: **Oxley, Robin John George
Marks & Clerk LLP
90 Long Acre
London
WC2E 9RA (GB)**

(56) References cited:
WO-A1-2007/037111    WO-A1-2007/052603
JP-A- 11 301 221      JP-A- 11 301 223
JP-A- 2007 276 596    JP-A- 2008 143 485

EP 2 292 451 B1

**Description**

TECHNICAL FIELD

The present invention relates to a run-flat tire which can travel relatively long distance even in a run-flat state in which the air in the tire has come out due to a puncture, thereby improving the safety of vehicles, and specifically, to a run-flat tire which has an excellent run-flat performance as well as a high high-speed straight running stability when the tire is in an inflated state which is a non-punctured state, a high steering stability on both of a dry road surface and a wet road surface (hereinafter, each referred to as "dry performance" and "wet performance") and an excellent fuel efficient performance.

BACKGROUND ART

As run-flat tires which can travel a certain amount of distance safely without losing a load supporting ability of the tire even in the state in which the inner pressure of the tire is decreased due to a puncture or the like, a variety of run-flat tires of side reinforced type are proposed wherein a side reinforcing rubber layer having a relatively high modulus and having a crescent-shape in the tire width direction is disposed in the inner surface of a carcass in the side wall portion of the tire, to thereby improve the rigidity of the side wall portion, and to thereby allow the tire to hold loads without extremely increasing the flexural deformation of the side wall portion when the inner pressure is decreased (see, for example, Patent Documents 1 and 2).

On the other hand, recently, in order to improve the safety of vehicles, it is required to improve a dry performance and a wet performance of tires at the same time by increasing the frictional coefficients ($\mu$) of the tire both on a dry road surface and on a wet road surface. A variety of techniques have been developed in response to the demands for improvement concerning such a dry performance and a wet performance. For example, in the development of rubber compositions for treads of tires which compositions directly contribute to the dry performance and wet performance of the tire, it is generally effective to employ as an indication a loss tangent (tan $\delta$) at around a temperature of 0°C and a loss tangent (tan $\delta$) at around a temperature of 30°C. In concrete, by employing as the tread a rubber composition having a high tan $\delta$ at around a temperature of 0°C, the frictional coefficient ($\mu$) of the tire on a wet road surface can be increased to improve the wet performance, and on the other hand, by employing as the tread a rubber composition having a high tan $\delta$ at around a temperature of 30°C, the frictional coefficient ($\mu$) of the tire on a dry road surface can be increased to improve the dry performance.

Concerning a trend in global carbon dioxide emission control involving an increased interest in environmental problems in recent years, a demand for a fuel efficient performance of cars is increasing. Also with regard to tire performances, in order to deal with such a demand, it is required for the rolling resistance of the tire to be decreased. In the development of rubber compositions for treads of tires which compositions contribute to the rolling resistance of tires, it is generally effective to employ as an indication a loss tangent (tan $\delta$) at around a temperature of 60°C. In concrete, by employing as the tread a rubber composition having a low tan $\delta$ at around a temperature of 60°C, heat generation of the tire is restrained and the rolling resistance of the tire is decreased, and, as a result, the fuel efficient performance of the tire can be improved.

As the techniques which embody a tire which has the dry performance, wet performance and fuel efficient performance at the same time, a technique which improves a tread rubber is disclosed in Patent Document 3. And, as the techniques with which an improvement of steering stability and an improvement of riding quality are intended by focusing on steel cords used for a belt layer, for example, a technique that a specified steel cord with a small wire diameter is employed and a technique that a steel cord is defined by a flexing resistance and a tensile elongation are proposed in Patent Document 4 and in Patent Document 5, respectively. Further, in Patent Document 6, a tire which is defined by the relational expression of a diameter of the cord, the number of filaments in one cord and the end count of the cords in a belt layer is disclosed. Still further, in Patent Document 7, a tire in which a belt ply whose belt cord structure and end count are defined within a prescribed range is disposed via a shock absorbing rubber is disclosed.

RELATED ART DOCUMENTS

PATENT DOCUMENTS

Patent Document 1: Japanese Unexamined Patent Application Publication No. 2000-264012 (Claims and the like)
Patent Document 2: Japanese Unexamined Patent Application Publication No. 2005-297876 (Claims and the like)
Patent Document 3: Japanese Unexamined Patent Application Publication No. 2006-274049 (Claims and the like)

Patent Document 4: Japanese Unexamined Patent Application Publication No. S59-38102 (Claims and the like)
Patent Document 5: Japanese Unexamined Patent Application Publication No. S60-185602 (Claims and the like)
Patent Document 6: Japanese Unexamined Patent Application Publication No. S63-2702 (Claims and the like)
Patent Document 7: Japanese Unexamined Patent Application Publication No. H03-143703 (Claims and the like)

## DISCLOSURE OF THE INVENTION

### PROBLEMS TO BE SOLVED BY THE INVENTION

Although run-flat tires of side reinforced type which have hitherto been proposed have made vehicles to travel a certain amount of distance safely without losing a load supporting ability of the tire even in the state in which the inner pressure of the tire is decreased due to a puncture or the like, a driving performance at the time when the tire is in an inflated state which is a non-punctured state has not been sufficiently examined. That is, in the case of run-flat tires, in the existing circumstances, the above mentioned required properties which are a high-speed straight running stability, a dry performance and a wet performance, and a fuel efficient performance at the time when the tire is in a non-punctured state have not been sufficiently examined.

Accordingly, an object of the present invention is to provide a run-flat tire which has an excellent run-flat performance as well as a high high-speed straight running stability in the non-punctured state, a high steering stability on both of a dry road surface and a wet road surface and an excellent fuel efficient performance.

### MEANS FOR SOLVING THE PROBLEMS

In order to improve the straight running stability, steering stability, and fuel efficient performance of vehicles while running at the time when a run-flat tire of side reinforced type is in a non-punctured state, the present inventors focused on and intensively examined physical properties of rubber at the tread portion and rigidity of the belt, i.e., ratio of the amount of steel in the belt portion, to thereby complete the present invention.

That is, a run-flat tire of the present invention comprises:

as a skeleton a carcass extending toroidally between a pair of bead portions on left and right sides, wherein, on the crown portion of said carcass in the radial exterior direction, at least two crossing belt layers which are composed of rubberized steel cords and a tread rubber are disposed in the mentioned order, and wherein a reinforcing rubber whose cross sectional shape in the tire width direction is a crescent-shape is provided in the inside portion of the side wall portion of said carcass,

wherein said steel cords have a single-twisted structure or a core/single layer sheath structure with 6 to 10 steel wires having a wire diameter of 0.10 to 0.20 mm, the end count of said steel cords is not smaller than 40 cords/50 mm, and the distance between the adjacent steel cords in the belt layer is not smaller than 0.3 mm, and

the dynamic storage modulus E' (MPa) at a temperature of 30°C and the loss tangent tan $\delta$, at a temperature of 60°C of said tread rubber respectively satisfy the relationships represented by the following formulae:

$$5.0 \leq E'$$

and

$$0.050 \leq \tan \delta \leq 0.240.$$

In the run-flat tire of the present invention, it is preferable that, in said tread rubber, 20 to 80 parts by mass of white filler and 10 to 30 parts by mass of carbon black with respect to 100 parts by mass of rubber component are added, and the parts of said white filler A and the parts of said carbon black B satisfy the relationship represented by the following formula: $20 \leq (A/(A+B)) \times 100 \leq 95$. It is also preferable that the cross sectional shape of said steel cords is flat and the direction of the major axis of the flat cross section is arranged along the width direction of said belt layer. Further, said end count of said steel cords is preferably 40 to 60 cords/50 mm. And, the distance between the adjacent steel cords in the belt layer is preferably 0.4 to 1.0 mm.

Concrete effect of the run-flat tire will be described below.

Run-flat performances of the tires depend on how far vehicles can travel safely in deflated states such as a puncture state. In a run-flat tire of side reinforced type, a reinforcing rubber whose cross sectional shape in the tire width direction is a crescent-shape is provided inside the tire with its center at the side wall portion. Without such a reinforcing rubber, it is difficult for the tire to exert a run-flat performance when punctured because, although the tire can maintain its load holding ability by the inner pressure of the air in the tire, the load supporting ability of the side wall portion for itself is limited due to relatively small thickness and low hardness of the rubber at the side wall portion. Consequently, such a reinforcing rubber reinforces the side wall portion and a tread shoulder portion and a bead portion positioned at both sides of the side wall portion to enhance the load supporting ability at these portions, and thus deformation is decreased at the side wall portion where the degree of deformation is large in deflated states such as a punctured state, whereby the run-flat performance can be maintained.

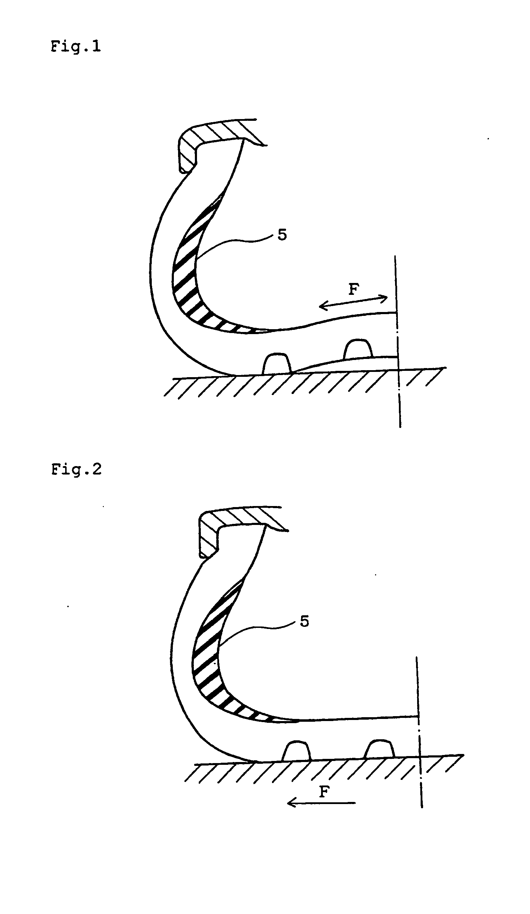

Fig. 1 illustrates a cross sectional view of a run-flat tire during run-flat running. Such a deformation can be confirmed by an examination using a CT scanner, and it is found that a reinforcing rubber 5 at the side wall portion requires extremely large rigidity for supporting the load. On the other hand, when the tire is in a non-punctured state, that is, in an inflated state, a normal tire without the reinforcing rubber 5 deforms greatly at the side portion when loaded, absorbs the load and does not or hardly transmit an additional force on the area contacting the ground. However, on the contrary, a run-flat tire having the reinforcing rubber 5 with a high rigidity hardly generates such a deformation at the side portion.

As mentioned above, in the case of a run-flat tire, the inner side of the shoulder portion is bound by a road surface, and a bending deformation by the load at the outer side of the shoulder portion hardly occurs by the presence of the reinforcing rubber, which results in direct transmittance of load (F) to the outer side of the shoulder portion (Fig. 2). As the result, shoulder blocks undergo transverse shear deformation strongly, and consequently, a vehicle travels in a state that a large force directing from a road surface to the outer side of the shoulder portion is generated as the reaction force in the tire. This force is applied to both sides of side shoulder portions and these forces are in balance when running on a homogeneous road surface. However, the actual road surfaces are rarely homogeneous, and small inequalities of a general road surface cause imbalance between the left and right forces (F), which imbalance is transmitted to a wheel. This makes a vehicle difficult to travel straight, resulting in degradation of straight running stability and steering stability of a vehicle. This also increases deformation at the tread portion, which, as a result, increases the rolling resistance and deteriorates the fuel efficient performance. The present inventors defined interactions of such a run-flat tire, then discovered that, by disposing low-loss rubber for the tread rubber and disposing a member having a higher rigidity than that of conventional one for the belt portion, rolling resistance can be reduced while improving a high-speed straight running stability, a dry performance and a wet performance.

EFFECTS OF THE INVENTION

By the present invention, a run-flat tire which has an excellent run-flat performance and at the same time excels in a high-speed straight running stability when the tire is in a non-punctured state, a dry performance and a wet performance, and a fuel efficient performance, can be provided.

BRIEF DESCRIPTION OF THE DRAWINGS

Fig. 1 is a schematic cross sectional view of the right half of a run-flat tire running while the tire is in a punctured state.
Fig. 2 is a schematic cross sectional view of the right half of a run-flat tire running while the tire is in a non-punctured state.
Fig. 3 is a schematic cross sectional view of the right half of a run-flat tire according to one embodiment of the present invention.

MODE FOR CARRYING OUT THE INVENTION

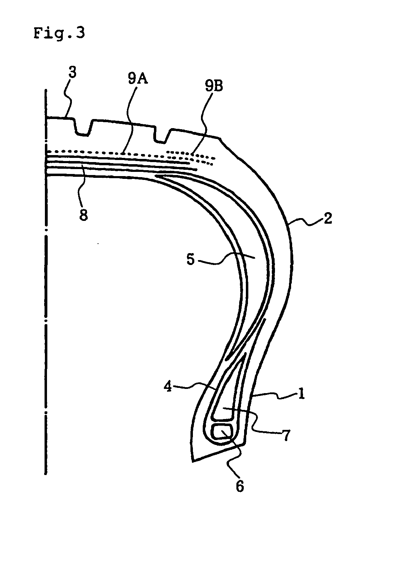

An embodiment of the present invention will be described in detail with reference to the drawings. Fig. 3 is a partial cross sectional view of one example of run-flat tires of the present invention. The tire illustrated in Fig. 3 comprises a pair of right and left bead portions 1 and a pair of side wall portions 2, and a tread portion 3 which is connected to the both side wall portions 2, and is provided with a carcass 4 which is composed of one or more carcass plies which extend toroidally between a pair of the bead portions 1, and which reinforces each of these portions 1, 2 and 3, and a pair of side reinforcing rubbers 5 whose cross sectional shape in the tire width direction is a crescent shape and which are disposed inside of a carcass 4 at the side wall portion 2.

In the tires illustrated in the Figs, bead filler 7 is disposed on the outer side of ring-shaped bead core 6 in the tire radial direction which is respectively embedded in the bead portion 1; further, a belt 8 composed of two crossing belt layers is disposed on the outer side of the carcass 4 in the tire radial direction at the crown portion; and in addition, a belt reinforcing layer 9A is disposed on the outer side of the belt 8 in the tire radial direction such that all of the belt 8 is covered, and further, a pair of belt reinforcing layers 9B are disposed such that only both sides of the belt reinforcing layer 9A are covered. Here, the belt layer is composed of rubberized steel cord layers which extend obliquely with respect to the tire equatorial plane, and two belt layers are piled such that the cords which constitute the belt layer intersect across the tire equatorial plane to constitute the belt 8. The belt reinforcing layers 9A and 9B are generally composed of a rubberized cord layer whose cords are arranged substantially parallel to the tire circumference direction.

The carcass 4 in the illustrated example is constituted by one carcass ply comprised of a plurality of reinforcing cords arranged in parallel which are covered by coating rubber; and the carcass 4 is comprised of a body portion which extends toroidally between a pair of bead cores 6 each embedded in the above-mentioned bead portion 1, and a turn-over portion which is rolled up around each bead core 6 from the inner side to the outer side in the tire width direction and outward in the radial direction. However, in the run-flat tire of the present invention, the number of the plies and the structure of the carcass 4 are not limited thereto. The carcass 4 is provided with a carcass cord having a radial structure which inclines at an angle of 60 to 90° with respect to the tire equatorial plane; and organic fiber cords such as polyesters, nylons, aromatic polyamides and the like may be preferably employed. The belt 8 in the illustrated example is composed of two belt layers. However, the number of belt layers which constitute the belt 8 is not limited thereto. It is not always necessary for a run-flat tire of the present invention to be provided with belt reinforcing layers 9A and 9B. And the run-flat tire may also be provided with a belt reinforcing layer having another structure.

In the present invention, it is required that the dynamic storage modulus E' (MPa) at a temperature of 30°C and the loss tangent tan $\delta$ at a temperature of 60°C of the tread rubber respectively satisfy relationships represented by the following formulae:

$$5.0 \leq E'$$

and

$$0.050 \leq \tan \delta \leq 0.240.$$

When the tan $\delta$ is smaller than 0.050, degradation of the steering stability and dry performance may be caused. On the other hand, when the tan $\delta$ is larger than 0.240, the effect of decreasing a rolling resistance deteriorates and it becomes difficult to improve a fuel efficient performance.

When the dynamic storage modulus E' at a temperature of 30°C is smaller than 5.0 MPa, the effect of enhancing a steering stability on a dry road surface (dry performance) is not obtained. The dynamic storage modulus E' preferably satisfies the relationship represented by the following formula:

$$8.0 \leq E'.$$

Next, the strain energy loss distribution at the tread portion involved in steering stability and fuel efficient performance will be taken into account. In the case of a normal tire which does not have a side reinforcing rubber, the tread portion is easily deformed homogeneously because the tire deformation can spread also on the side portion due to the low rigidity thereof, and therefore, it is considered that the strain energy loss distribution in a non-punctured state can spread homogenously on the tread portion. On the other hand, in the case of a run-flat tire, the deformation tends to be concentrated at the tread side portion because the tire deformation cannot spread at the side portion due to the high rigidity of the side portion because of the presence of the side reinforcing rubber, and therefore, it is considered that the strain energy loss distribution in a non-punctured state is concentrated at the tread side portion.

Accordingly, unlike with the case of a normal tire, a concentration on the tread side portion in the strain energy loss distribution occurs in a non-punctured state in a run-flat tire, and it is important for the concentration of this strain energy loss to be dissipated in order to improve the steering stability and fuel efficient performance of the run-flat tire in a non-punctured state.

In a run-flat tire of the present invention, a crossing belt layer exerts a high tensile rigidity in the circumferential direction and an in-plane bending rigidity and at the same time has a low out-of-plane bending rigidity. The crossing belt layer undergoes a large bending deformation in the in-plane direction at the vicinity of cornering limit, and a buckling may occur when the layer undergoes a large compressive deformation at the inner side of the bending deformation. However, in the present invention, by reducing the out-of-plane bending rigidity of the crossing belt layer, the out-of-plane bending deformation force accompanied by the compression is reduced, and thus the inner pressure of the tire can constrain a buckling deformation. As the result, in the run-flat tire of the present invention, the contact pressure distribution in a non-punctured state can be homogenous and a concentration of the strain energy loss distribution at the tread side portion can be dissipated, and thus, an input applied the tread rubber can be homogenized to improve the steering stability and a fuel efficient performance in the non-punctured state.

In order to attain such a crossing belt layer, it is essential that the steel cords to be used have a single-twisted structure or a core/single layer sheath structure with 6 to 10 steel wires having a wire diameter of 0.10 to 0.20 mm, the end count of the steel cords be not smaller than 40 cords/50 mm, and the distance between the adjacent steel cords in the belt layer be not smaller than 0.3 mm.

When the wire diameter is larger than 0.20 mm, the bending rigidity of the cords becomes high, and it becomes difficult to decrease the out-of-plane bending rigidity of the crossing belt layer. On the other hand, when the wire diameter is smaller than 0.10 mm, it becomes difficult to obtain a high tensile rigidity under the conditions that the number of wires and distances between the cords adapt to the present invention, and at the same time, cost overruns occur.

When the number of wires is large, bending rigidity increases due to the interference between the wires at the time when the cord is bent, while, when the number of wires is not more than 10, the influence on the bending rigidity is small. However, when the number of wires is smaller than 6, it becomes difficult to obtain a high tensile rigidity in the circumferential direction which adapts to the present invention.

Further, in the present invention, the end count of the steel cords is not smaller than 40 cords/50 mm, preferably 40 to 60 cords/50 mm. The end count is not smaller than 40 cords/50 mm because it is required to keep a minimum occupancy rate for required steel, and because, even when steel occupancy rates are the same, tensile rigidity of the crossing belt layer in the circumferential direction becomes higher when the size of steel cord mesh formed by the upper and lower belt layers is smaller and the number of the mesh is larger.

Here, the smaller the diameter of the wires is and the smaller the number of the wires is, it is preferable to increase the end count to obtain a desired tensile rigidity in the circumferential direction. And it is essential that the distance between the adjacent steel cords in the belt layer is not smaller than 0.3 mm. If the distance between the adjacent steel cords is smaller than 0.3 mm, minute cracks generated at the end portion of the steel cords grow between the adjacent steel cords and connect to each other between the belt layers to enlarge, which leads to belt separation. The distance between the adjacent steel cords in the belt layer is preferably about 0.4 to 1.0 mm.

And, preferably, by employing steel cords having a flat cross sectional shape and arranging the cords such that the direction of the major axis of the flat cross section is along the width direction of the belt layer, a higher in-plane bending rigidity and a lower out-of-plane bending rigidity can be obtained.

As a steel cord structure having a flat cross sectional shape, a single-twisted structure in which the spiral shape of the wire is squeezed in one direction, a structure in which a sheath is formed by twisting steel wires together around a core which is 2 or 3 steel wires arranged in parallel without being twisted together or the like can be applied. It is particularly preferred to apply a steel cord which has a core/single-layer sheath structure, such as a 2 in parallel + 4 to 7 structure, in which two steel wires are disposed as a core in parallel without being twisted together and the remaining steel wires are twisted together around the two steel wires because a higher in-plane bending rigidity and a lower out-of-plane bending rigidity can be obtained.

As the tread rubber used in the present invention, in concrete, a tread rubber which contains 20 to 80 parts by mass of white filler and 10 to 30 parts by mass of carbon black with respect to 100 parts by mass of rubber component and in which the parts of the white filler A and the parts of the carbon black B satisfy the relationship represented by the following formula:

$$20 \leq (A/(A+B)) \times 100 \leq 95$$

can be preferably employed.

When the parts of the white filler A is smaller than 20 parts by mass, a merit of improving a steering stability on a wet road surface is not obtained. On the other hand, when the parts of the white filler A is larger than 80 parts by mass, processabilities such as unification of the rubber sheet become poor. When the parts of carbon black are smaller than 10 parts by mass, a processability such as in a warming processing becomes poor. When the parts of carbon black is larger than 30 parts by mass, a merit of improving a steering stability on a wet road surface is reduced. Further, when $(A/(A+B)) \times 100 < 20$, a merit of improving a steering stability on a wet road surface is not obtained. On the other hand, when $(A/(A+B)) \times 100 > 95$, processabilities such as unification of the rubber sheet become poor.

Specific examples of a rubber component of the tread rubber include styrene-butadiene copolymer rubber (SBR) and natural rubbers (NR), and synthetic rubbers such as styrene-isoprene copolymer rubber (SIR), polyisoprene rubber (IR), polybutadiene rubber (BR), butyl rubber (IIR) and ethylene-propylene copolymer rubber.

Examples of the white filler include silica, aluminum hydroxide and the like, and among these, silica is preferred.

Examples of the silica are not particularly restricted and include wet silica (hydrous silicic acid), dry silica (anhydrous silicic acid), calcium silicate, aluminum silicate, and among these, wet silica is preferred because of the effect of improving break characteristics and excellent compatibility of wet characteristics and rolling resistance. Note, in the case of using silica as the white filler, that a silane coupling agent is preferably added at the time of mixture in view of further enhancing the enforcing properties thereof. Examples of such silane coupling agents include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptomethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazoltetrasulfide, 3-triethoxysilylpropylbenzothiazoltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropyl benzothiazol tetrasulfide and the like. And, among these, bis(3-triethoxysilylpropyl)tetrasulfide and 3-trimethoxysilylpropylbenzothiazoltetrasulfide are preferred in view of the effect of improving enforcing properties. These silane coupling agents may be used alone or in combination.

As the carbon black, FEF, SRF, HAF, ISAF or SAF grade carbon black can be employed, but not limited thereto. Among these, a carbon black whose iodine absorption rate (IA) is not less than 60 mg/g and whose dibutylphthalate (DBP) oil absorption rate is not less than 80 mL/100g is suitable. Various properties of a rubber composition can be improved by adding carbon black, and HAF, ISAF and SAF grade carbon blacks are more preferred in view of wear resistance.

The tread rubber may contain a softening agent, and the amount to be added is within a range of 0 to 30 parts by mass with respect to 100 parts by mass of rubber component. When the amount of softening agent added is larger than 30 parts by mass, a tensile rigidity and a low heat generation property of a vulcanized rubber tend to degenerate. As the softening agent, processing oils or the like can be employed, and more specifically, examples of the processing oils include paraffin oils, naphthene-base oils and aromatic oils. Among these, aromatic oils are preferred in view of tensile rigidity and durability, and naphthene-base oils and paraffin-base oils are preferred in view of hysteresis loss and low temperature performance.

As the tread rubber, a general cross-linking system for rubber can be used and it is preferred to use a cross-linking agent and a vulcanization accelerator in combination. The cross-linking agent is preferably contained such that the amount of sulfur is in a range of 0.1 to 10 parts by mass with respect to 100 parts by mass of rubber component and more preferably contained such that the amount of sulfur is in a range of 1 to 5 parts by mass with respect to 100 parts by mass of rubber component. When the amount of added cross-linking agent is such that the amount of sulfur is smaller than 0.1 part by mass with respect to 100 parts by mass of rubber component, break strength, durability and low heat generation property of the vulcanized rubber decrease. On the other hand, when the amount of added cross-linking agent is such that the amount of sulfur is larger than 10 parts by mass with respect to 100 parts by mass of rubber component, rubber elasticity is to be lost. Examples of vulcanization accelerators include, but not limited to, thiazole-based vulcanization accelerators, such as 2-mercaptobenzothiazole (M), dibenzothiazyl disulfide (DM), N-cyclohexyl-2-benzothiazyl sulfeneamide (CZ), N-t-butyl-2- benzothiazyl sulfeneamide (NS), guanidine-based vulcanization accelerators such as diphenylguanidine (DPG) and urea-based vulcanization accelerators such as N,N'-diphenylthiourea (CA). The amount of a vulcanization accelerator to be used is preferably in the range of 0.1 to 5 parts by mass with respect to 100 parts by mass of rubber component, and more preferably in the range of 0.2 to 3 parts by mass. These vulcanization accelerators may be used alone or in combination.

In the tread rubber, additives generally used in the rubber industry other than those mentioned above, such as an age resister, zinc oxide, stearic acid, antioxidant and antiozonant can be suitably selected to be added in the range without impairing the object of the present invention.

EXAMPLES

The present invention will be described by way of Examples below.

(Examples 1 to 5 and Comparative Examples 1 to 4)

A run-flat tire of side reinforced type as shown in Fig. 3 comprising two crossing belt layers which are composed of rubberized steel cords in the radial direction of the crown portion of a carcass and a tread rubber in the mentioned order was made. As the belt layers of each of Examples and Comparative Examples, those which satisfy the conditions according to the following Table 2 and 3 were used respectively. The size of the tires was 225/45R17, and the angle of the crossing belt layers was ±62° with respect to the tire width direction. The formulation of the tread rubber used is shown in Table 1 below.

[Table 1]

| Added component | Parts by mass |
|---|---|
| SBR (manufactured by Asahi Kasei Corporation; TUFDENE 3335) | 82.50 |
| SBR (manufactured by JSR Corporation; #1712) | 55.0 |
| Carbon black (manufactured by TOKAI CARBON CO., LTD.; SEAST 7HM) | See Table 3 |
| Silica (manufactured by Nippon Silica Industrial Co., Ltd.; Nip Seal AQ) | See Table 3 |
| Silane coupling agent (manufactured by Degussa AG; Si75) | 7.0 |
| Aromatic oil | 5.0 |
| Stearic acid | 2.0 |
| Age resister 6C (N-phenyl-N-1,3-dimethylbutyl-p-phenylenediamine) | 1.0 |
| Zinc oxide | 3.0 |
| Vulcanization accelerator DPG (N,N'-diphenylguanidine) | 1.0 |
| Vulcanization accelerator CA | 1.5 |
| Vulcanization accelerator DG | 0.5 |
| Sulfur | 1.5 |

[Table 2]

| | Belt structure | |
|---|---|---|
| | (1) | (2) |
| Cord structure | 1 × 5 open | 2 in parallel + 6 |
| Wire diameter (mm) | 0.23 | Core:0.15 Sheath:0.175 |
| Number of wires (cords) | 5 | 8 |
| End count (cords/50 mm) | 35 | 43 |
| Distance between cords (mm) | 0.68 | 0.55 |

For each of the obtained test tires, an evaluation was performed according to the following. The results thereof as well as measured values of the dynamic storage modulus E' at a temperature of 30°C and the loss tangent tan $\delta$ at a temperature of 60°C of the tread rubbers are shown altogether in the following Table 3.

(Measurement of E' and tan $\delta$)

By using a rheometer manufactured by Rheometrics, Inc., with the condition that a frequency is 15 Hz and deformation is 5%, dynamic storage moduli (E') at a temperature of 30°C and loss tangents (tan $\delta$) at a temperature of 60°C of the tread rubbers were measured.

(High-speed straight running stability and Steering stability)

High-speed straight running stability and steering stability test was conducted by a driver's feeling running on a circuit in a dry state (dry) and in a wet state (wet) with each test tire put on an actual car. Results were graded on the basis of a possible maximum of 10. The larger the value is, the more excellent and thus the better each of the high-speed straight running stability and steering stability is. As for the dry steering stability, a difference of 0.5 in grade means much in performance, and a general driver can recognize the difference in performance.

(Processability)

Processability was evaluated according to the following.

After sheeting an unvulcanized rubber on a sheeting roll, the rubber was punched out with a die having a size of 10 cm $\times$ 2 cm $\times$ 2 mm, and left to stand for 24 hours, and thereafter, the amount of shrinkage of the rubber after being punched out was measured. A case when the amount of shrinkage was not larger than 40% was represented by O (good), a case when the amount of the shrinkage was larger than 40% and not larger than 60% $\Delta$, and a case when the amount of the shrinkage was larger than 60% x.

(Rolling resistance test)

Rolling resistance of the tire was measured by a method, so-called the coast down method, in which a measurement is performed by using a rolling drum having a steel smooth surface with an external diameter of 1707.6 mm and a width of 350 mm and revolving the drum at a speed of 0 to 180 km/h under a normal inner pressure according to the JIS standard and under an action of 450 kgf load.

The results are indicated as indices with the index of Comparative Example 1 being set as 100. The larger the value of index is, the more excellent the result is.

[Table 3]

| | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|
| Belt structure | (1) | (1) | (2) | (2) | (2) | (2) | (2) | (2) | (2) |
| E' (30°C) (MPa) | 10.0 | 4.5 | 15.2 | 16.5 | 14.0 | 12.5 | 13.5 | 8.0 | 10.0 |
| tan δ (60°C) | 0.20 | 0.05 | 0.248 | 0.260 | 0.230 | 0.190 | 0.212 | 0.076 | 0.120 |
| A*1 | 30 | 30 | 70 | 85 | 80 | 7 | 60 | 20 | 30 |
| B*1 | 20 | 10 | 10 | 30 | 5 | 37 | 10 | 20 | 20 |
| (A/(A+B))×100 | 60 | 75 | 88 | 74 | 94 | 19 | 86 | 50 | 60 |
| High-speed straight running stability | 5 | 5 | 6.5 | 6.5 | 6.5 | 6.5 | 6.5 | 6.0 | 6.0 |
| Dry steering stability | 5 | 4.5 | 7.5 | 8.0 | 7.5 | 6.5 | 7.0 | 5.5 | 6.0 |
| Wet steering stability | 5 | 5.5 | 6.5 | 6.0 | 7.0 | 4.5 | 6.5 | 4.5 | 5.0 |
| Rolling resistance | 100 | 114 | 92 | 95 | 100 | 108 | 105 | 121 | 115 |
| Processability | O | △ | △ | △ | △-× | O | △ | O | O |

* 1) A: represents parts (by mass) of silica (white filler) with respect to 100 parts by mass of rubber component, and

B: represents parts (by mass) of carbon black with respect to 100 parts by mass of rubber component.

As shown in the above Table 3, for every run-flat tire of the Examples which employed, as the steel cords in the belt layer and the tread rubber, those which satisfy prescribed conditions according to the present invention, good results were obtained for all performances as compared with a run-flat tire of Comparative Examples.

(Reference Examples 1 and 2)

By using, as the tread rubber, the same tread rubber as in Example 1 and using, as the crossing belt layers, crossing belt layers which satisfy the conditions according to the above Table 2 and Table 4 below, normal tires without a side reinforcing rubber were made respectively. The size of the tires is 225/45R17, and the angle of the crossing belt layers was ±62° with respect to the tire width direction.

(Comparative Example 5)

A run-flat tire of side reinforced type having a side reinforcing rubber was made such that the conditions of the tread rubber and the crossing belt layers are the same as in the Reference Example 1.

(Example 6)

A run-flat tire of side reinforced type having a side reinforcing rubber was made such that the conditions of the tread rubber and the crossing belt layers are the same as in the Reference Example 2.

(Total strain energy loss evaluation)

For each of the obtained test tires, strain energy loss at the tread portion was analyzed and calculated and thus the sum total thereof was determined. The change rates of the total strain energy losses due to the belt structures between respective test tires having the same structure except for the belt structures (between Reference Example 1 and Reference Example 2, and between Comparative Example 5 and Example 6) were determined respectively.
The results are shown altogether in Table 4 below

[Table 4]

| | Reference Example 1 | Comparative Example 5 | Reference Example 2 | Example 6 |
|---|---|---|---|---|
| Belt structure | (1) | (1) | (2) | (2) |
| Type of tire | Normal tire | Run-flat tire | Normal tire | Run-flat tire |
| Total strain energy loss (J) | 38.32 | 46.86 | 38.13 | 46.43 |
| Total strain energy loss change rate due to belt structure (%) | – | – | -0.5 | -0.9 |

As shown in Table 4 above, when the normal tire of Reference Example 1 and the run-flat tire of Comparative Example 5 to which tires the same belt structure (1) is applied are compared, the value of the total strain energy loss of the run-flat tire of Comparative Example 5 is much larger than that of the normal tire of Reference Example 1, and thus the amount of heat generation of the run-flat tire of Comparative Example 5 is also larger than that of the normal tire. This is thought to be because, as described above, unlike the case of normal tires without side reinforcing rubber, in the case of run-flat tires, the strain energy loss distribution is concentrated at the tread side portion since the tire deformation cannot spread at the side portion due to its high rigidity.
Here, in view of the difference between the belt structure (1) and the belt structure (2), a belt having the belt structure (2) which satisfies conditions according to the present invention has a lower out-of-plane bending rigidity than that of a belt having the belt structure (1), and therefore, application of the belt structure (2) reduces an out-of-plane bending deformation force accompanied by compression of the tire, and thus buckling deformation is restricted, and as the result, an effect of homogenizing an input applied to the tread rubber is obtained.

However, in the case of a normal tire, much improvement in the value of the total strain energy loss was not observed also in the case of applying a belt structure (2) (Reference Example 2) instead of a belt structure (1) because it is also possible to spread the strain energy loss distribution homogenously in the case of applying a belt structure (1) (Reference Example 1).

On the other hand, in the case of the run-flat tire of Example 6, it is found that application of a belt structure (2) spreads a deformation which concentrates at the tread side portion in the case of applying a belt structure (1) (Comparative Example 5) homogenously, that is, the strain energy loss distribution in a non-punctured state spreads homogenously at the tread portion, whereby the value of the total strain energy loss is more effectively reduced as compared with the case of a normal tire and the amount of heat generation is also restrained.

DESCRIPTION OF SYMBOLS

| 1 | Bead portion |
|---|---|
| 2 | Side wall portion |
| 3 | Tread portion |
| 4 | Carcass |
| 5 | (Side) reinforcing rubber |
| 6 | Bead core |
| 7 | Bead filler |
| 8 | Belt |
| 9A, 9B | Belt reinforcing layer |

**Claims**

1. A run-flat tire comprising:

    as a skeleton a carcass (4) extending toroidally between a pair of bead portions (1) on left and right sides, wherein, on the crown portion of said carcass in the radial exterior direction, at least two crossing belt layers which are composed of rubberized steel cords and a tread rubber are disposed in the mentioned order, and wherein a reinforcing rubber (5) whose cross sectional shape in the tire width direction is a crescent-shape is provided in the inside portion of the side wall portion (2) of said carcass,
    wherein said steel cords have a single-twisted structure or a core/single layer sheath structure with 6 to 10 steel wires having a wire diameter of 0.10 to 0.20 mm, the end count of said steel cords is not smaller than 40 cords/ 50 mm, and the distance between the adjacent steel cords in the belt layer is not smaller than 0.3 mm, and the dynamic storage modulus E' (MPa) at a temperature of 30°C and the loss tangent tan δ at a temperature of 60°C of said tread rubber respectively satisfy the relationships represented by the following formulae:

$$5.0 \leq E'$$

and

$$0.050 \leq \tan \delta \leq 0.240.$$

2. The run-flat tire according to claim 1, wherein, in said tread rubber, 20 to 80 parts by mass of white filler and 10 to 30 parts by mass of carbon black with respect to 100 parts by mass of rubber component are added, and the parts of said white filler A and the parts of said carbon black B satisfy the relationship represented by the following formula:

$$20 \leq (A/(A+B)) \times 100 \leq 95.$$

3. The run-flat tire according to claim 1, wherein the cross sectional shape of said steel cords is flat and the direction of the major axis of the flat cross sectional shape is arranged along the width direction of said belt layer.

4. The run-flat tire according to claim 1, wherein said end count of the steel cords is 40 to 60 cords/50 mm.

5. The run-flat tire according to claim 1, wherein the distance between the adjacent steel cords in the belt layer is 0.4 to 1.0 mm.

**Patentansprüche**

1. Run-Flat-Reifen, der aufweist:

als ein Skelett eine Karkasse (4), die sich ringförmig zwischen einem Paar Wulstabschnitten (1) auf der linken und rechten Seite erstreckt, wobei im Zenitabschnitt der Karkasse in der radialen Außenrichtung mindestens zwei sich kreuzende Gürtellagen, die aus gummierten Stahlkorden bestehen, und ein Laufflächengummi in der erwähnten Reihenfolge angeordnet sind, und wobei ein Verstärkungsgummi (5), dessen Querschnittsform in der Breitenrichtung des Reifens sichelförmig ist, im Innenabschnitt des Seitenwandabschnittes (2) der Karkasse vorhanden ist,

wobei die Stahlkorde eine einfach gezwirnte Struktur oder eine Kern/einlagige Mantel-Struktur mit 6 bis 10 Stahldrähten mit einem Drahtdurchmesser von 0,10 bis 0,20 mm aufweisen, wobei die Anzahl der Stahlkorde nicht kleiner ist als 40 Korde/50 mm und der Abstand zwischen den benachbarten Stahlkorden in der Gürtellage nicht kleiner ist als 0,3 mm, und

der dynamische Speichermodul E' (MPa) bei einer Temperatur von 30 °C und die Verlusttangente tan δ bei einer Temperatur von 60 °C des Laufflächengummis jeweils die durch die folgenden Formeln verkörperten Beziehungen erfüllen:

$$5,0 \leq E'$$

und

$$0,050 \leq \tan \delta \leq 0,240.$$

2. Run-Flat-Reifen nach Anspruch 1, bei dem im Laufflächengummi 20 bis 80 Masse-T. weißer Füllstoff und 10 bis 30 Masse-T. Ruß mit Bezugnahme auf 100 Masse-T. der Gummikomponente zugesetzt werden, und wobei die Teile des weißen Füllstoffes A und die Teile des Rußes B die durch die folgende Formel verkörperte Beziehung erfüllen:

$$20 \leq (A/(A+B)) \times 100 \leq 95.$$

3. Run-Flat-Reifen nach Anspruch 1, bei dem die Querschnittsform der Stahlkorde flach ist und die Richtung der Hauptachse der flachen Querschnittsform längs der Breitenrichtung der Gürtellage angeordnet ist.

4. Run-Flat-Reifen nach Anspruch 1, bei dem die Anzahl der Stahlkorde 40 bis 60 Korde/50 mm beträgt.

5. Run-Flat-Reifen nach Anspruch 1, bei dem der Abstand zwischen den benachbarten Stahlkorden in der Gürtellage 0,4 bis 1,0 mm beträgt.

**Revendications**

1. Bandage pneumatique à roulage à plat, comprenant :

une carcasse (4) servant de squelette , s'étendant toroïdalement entre une paire de parties de talon (1) sur les côtés de gauche et de droite, dans lequel, sur la partie de sommet de ladite carcasse, dans la direction allant radialement vers l'extérieur, au moins deux couches de ceinture de croisement, composées de câblés d'acier caoutchoutés, et une gomme de bande de roulement, sont agencées dans l'ordre indiqué, une gomme de renforcement (5) dont la forme de section transversale dans la direction de la largeur du bandage pneumatique a une forme en croissant, étant agencée sur la partie intérieure de la partie de flanc (2) de ladite carcasse ; dans lequel lesdits câblés d'acier ont une structure à torsion simple ou une structure de gaine à noyau /à couche unique, avec 6 à 10 fils d'acier ayant un diamètre de fil compris entre 0,10 et 0,20 mm, la densité desdits câblés d'acier n'étant pas inférieure à 40 câblés/50 mm, et la distance entre les câblés d'acier adjacents dans la couche de ceinture n'étant pas inférieure à 0,3 mm ; et

le module de conservation dynamique E' (MPa) en présence d'une température de 30°C et la tangente d'angle de pertes tan δ en présence d'une température de 60°C de ladite gomme de bande de roulement satisfaisant respectivement les relations représentées par les formules ci-dessous :

$$5,0 \leq E'$$

et

$$0,050 \leq \tan \delta \leq 0,240.$$

2. Bandage pneumatique à roulage à plat selon la revendication 1, dans lequel on ajoute, dans ladite gomme de bande de roulement, 20 à 80 parties en poids de charge blanche et 10 à 30 parties en poids de noir de carbone par rapport à 100 parties en poids du composant de caoutchouc, les parties de ladite charge blanche A et les parties dudit noir de carbone B satisfaisant la relation représentée par la formule ci-dessous :

$$20 \leq (A/ (A+B)) \times 100 \leq 95.$$

3. Bandage pneumatique à roulage à plat selon la revendication 1, dans lequel la forme de section transversale desdits câblés d'acier est plate, la direction de l'axe majeur de la forme de section transversale plate s'étendant le long de la direction de la largeur de ladite couche de ceinture.

4. Bandage pneumatique à roulage à plat selon la revendication 1, dans lequel ladite densité des câblés d'acier est comprise entre 40 et 60 câblés/50 mm.

5. Bandage pneumatique à roulage à plat selon la revendication 1, dans lequel la distance entre les câblés d'acier adjacents dans la couche de ceintureest comprise entre 0,4 et 1,0 mm.

Fig.1

Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000264012 A
- JP 2005297876 A
- JP 2006274049 A
- JP S5938102 B
- JP S60185602 B
- JP S632702 B
- JP H03143703 B